# FASCICULE DE BREVET EUROPEEN

(11) **EP 4 033 194 B1**
(45) Date de publication et mention de la délivrance du brevet: **11.03.2026**
(21) Numéro de dépôt: 22152508.2
(22) Date de dépôt: 20.01.2022
(51) Int. Cl.: F28F 19/00, F28F 19/01, F28D 9/00, F28F 9/02, B01J 8/02, B01J 19/00, C01B 3/00, F25J 5/00, F28F 21/08

(54) **ÉCHANGEUR DE CHALEUR COMPRENANT AU MOINS UN FILTRE À PARTICULES, PROCÉDÉ D ASSEMBLAGE D'UN TEL ÉCHANGEUR**
WÄRMETAUSCHER MIT MINDESTENS EINEM PARTIKELFILTER, ZUSAMMENBAUVERFAHREN EINES SOLCHEN WÄRMETAUSCHERS
HEAT EXCHANGER INCLUDING AT LEAST ONE PARTICLE FILTER, METHOD FOR ASSEMBLING SUCH AN EXCHANGER

(30) Priorité: 26.01.2021 FR 2100727
(43) Date de publication de la demande: 27.07.2022
(73) Titulaire: L'Air Liquide, société anonyme pour l'Étude et l'Exploitation des procédés Georges Claude, 75007 Paris (FR)
(72) Inventeur: MASLIAH, Eric, 94400 VITRY SUR SEINE (FR); LEBAIN, Gilles, 94400 VITRY SUR SEINE (FR); AMANT, Ludovic, 94400 VITRY SUR SEINE (FR)
(74) Mandataire: Air Liquide

(56) Documents cités:
- EP-A1- 1 265 048
- EP-A1- 4 089 358
- FR-A1- 2 938 051
- FR-A3- 2 925 608
- JP-A- 2014 098 527
- US-A- 2 118 344
- US-A- 6 013 834
- US-B1- 9 127 896

## Description

La présente invention concerne un échangeur-réacteur en particulier un échangeur du type à plaques et ailettes brasées, comprenant au moins un filtre permettant de limiter l'introduction de particules indésirables dans le corps de l'échangeur ou de maintenir des particules remplissant une fonction particulière dans ledit corps de l'échangeur.

La présente invention trouve notamment application dans le domaine de la liquéfaction de l'hydrogène. En particulier, l'invention peut s'appliquer à un échangeur de chaleur catalytique qui liquéfie un débit d'hydrogène gazeux contre un débit un débit d'azote liquide ainsi qu'au procédé de liquéfaction mettant en œuvre ledit échangeur.

La présente invention s'applique aussi à la séparation de gaz par cryogénie, en particulier à la séparation d'air par distillation cryogénique. En particulier, la présente invention peut s'appliquer à un échangeur de chaleur qui vaporise un débit liquide, par exemple de l'oxygène liquide, de l'azote et/ou de l'argon par échange de chaleur avec un débit gazeux, par exemple l'air ou l'azote.

La présente invention peut également s'appliquer à un échangeur de chaleur qui vaporise au moins un débit de mélange liquide-gaz, par exemple un mélange d'hydrocarbures, par échange de chaleur avec au moins un autre fluide à liquéfier, tel du gaz naturel.

Une technologie couramment utilisée pour les échangeurs de chaleur est celle des échangeurs à plaques brasées, qui permettent d'obtenir des organes très compacts offrant une grande surface d'échange et de faibles pertes de charge. Ces échangeurs comprennent un ou plusieurs corps d'échange formés d'un ensemble de plaques parallèles entre lesquelles peuvent être insérées des éléments intercalaires, tels des structures ondulées ou ondes, qui forment des structures d'échange thermique à ailettes. Les plaques empilées forment entre elles un empilement de passages plats pour différents fluides à mettre en relation d'échange thermique. Les échangeurs comprennent des collecteurs de fluide munis de tubulures d'entrée et de sortie pour l'introduction des fluides dans le corps d'échange et l'évacuation des fluides hors du corps d'échange.

Certains échangeurs peuvent nécessiter la mise en place d'un dispositif de filtration des fluides afin de limiter, voire d'éviter, l'introduction dans le corps d'échange de particules solides néfastes aux performances thermiques et hydrauliques de l'échangeur.

Dans d'autres échangeurs, il est nécessaire au contraire de retenir des particules à l'intérieur du corps de l'échangeur. Ces particules peuvent être disposées à l'intérieur des passages du corps d'échange afin d'y assurer différentes fonctions. Dans les échangeurs catalytiques en particulier, les particules sont formées d'un matériau catalyseur produisant une réaction chimique avec le fluide circulant dans les passages.

On connaît notamment des échangeurs catalytiques destinés à la liquéfaction de l'hydrogène dans lesquels la conversion de la molécule ortho-hydrogène en molécule para-hydrogène est effectuée durant la liquéfaction grâce à un catalyseur approprié. Dans ces échangeurs, les collecteurs d'entrée et de sortie pour l'introduction et l'évacuation de l'hydrogène sont généralement formés de dômes recouvrant les surfaces d'entrée et de sortie de fluide du corps de l'échangeur. Afin de limiter le mouvement des particules de catalyseur dans les passages de l'échangeur, le volume interne des collecteurs d'entrée et de sortie est également rempli de catalyseur.

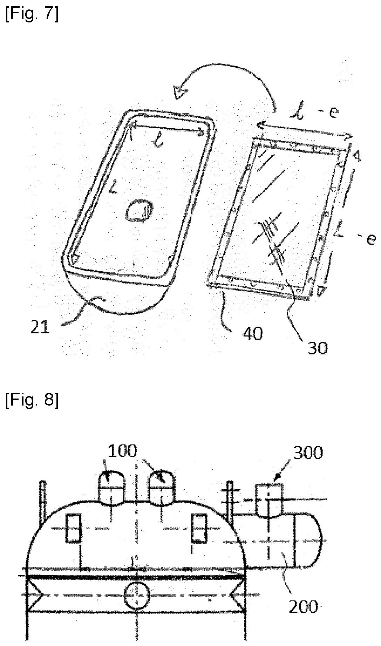

Le remplissage du corps et des collecteurs de l'échangeur est réalisé après que ces éléments aient été brasés entre eux. Un échangeur muni d'un tel dispositif de remplissage est schématisé partiellement sur [Fig. 8]. Le catalyseur est distribué par une ou plusieurs tubulures verticales 100 situées au sommet de l'échangeur et reliées au volume interne d'un collecteur. Le remplissage s'effectue par écoulement gravitaire des particules de catalyseur à travers les tubulures verticales 100 au moyen de buses de distribution spécifiques. Le collecteur est également muni d'une tubulure latérale 200 dans laquelle on insère, avant remplissage avec le catalyseur, des cartouches de filtration de forme cylindrique. Ces cartouches sont formées d'un matériau poreux configuré pour laisser passer le fluide dans les collecteurs mais pour bloquer les particules de catalyseur. Une canalisation d'amenée de fluide 300 est reliée à la tubulure latérale de sorte que le fluide est distribué dans l'échangeur en passant par la cartouche de filtration.

Cette solution conduit à une architecture complexe nécessitant le piquage de nombreuses conduites sur les collecteurs des échangeurs. Outre la complexité de fabrication et de mise en œuvre des cartouches filtrantes, cette solution augmente inutilement le volume de catalyseur utilisé puisque les collecteurs en sont aussi remplis.

L'introduction du catalyseur dans le corps d'échange est également complexe et nécessite un outillage spécifique. L'homogénéité de la distribution des particules de catalyseur entre les différents passages du corps d'échange est difficile à contrôler. On connait en particulier du document JP-A-201498527 un échangeur catalytique selon le préambule de la revendication 1 dans lequel des collecteurs sont munis de filtres comprenant un treillis métallique fritté. Ce matériau est formé d'une pluralité de couches individuelles qui sont pressées et liées les unes aux autres par un procédé de frittage. Cette solution présente plusieurs inconvénients. Le procédé de fabrication de ces filtres est complexe. En outre, du fait de la superposition de plusieurs couches, il est difficile de contrôler le degré de transparence ou de porosité du filtre, ainsi que la dimension de ses ouvertures, ce qui peut affecter les caractéristiques de filtration et de pertes de charges de l'échangeur en fonctionnement.

La présente invention a notamment pour but de résoudre tout ou partie des problèmes mentionnés ci-avant, en proposant un échangeur-réacteur muni d'un dispositif de filtration qui soit de conception et de mise en œuvre plus simple que dans l'art antérieur, dont le dimensionnement, notamment en terme de transparence, de porosité ou de dimensions d'ouverture, peut être contrôlé de façon plus précise, et qui permette en outre, en particulier lorsque l'échangeur est destiné à la mise en œuvre de réactions catalytiques, un maintien du catalyseur dans les passages et un remplissage des passages plus simple et mieux contrôlé lors de la fabrication de l'échangeur.

Une solution selon l'invention est alors un échangeur-réacteur selon la revendication 1 et un procédé d'assemblage d'un tel échangeur-réacteur selon la revendication 14.

Selon le cas, l'échangeur selon l'invention peut comprendre l'une ou plusieurs des caractéristiques énoncées ci-dessous.

Le matériau métallique en feuille présente une densité surfacique d'ouverture allant de 15 à 35 % ou une densité volumique de pores allant de 75 à 98 %.

Le matériau métallique en feuille est formé en tout ou partie d'acier, en particulier d'acier inoxydable, de nickel ou d'alliage de nickel, en particulier d'alliage comprenant de 50% à 75% en poids de nickel.

Le matériau métallique en feuille présente une épaisseur de 0,20 à 0,75 mm.

Le matériau métallique en feuille est formé d'une couche unique dudit matériau.

Le matériau métallique en feuille est un tissé de fils métalliques, lesdits fils ayant un diamètre de 0,10 à 0,30 mm, de préférence de 0,10 à 0,25 mm.

Le matériau métallique en feuille comprend au moins une série de premiers fils métalliques entrelacés avec une série de deuxièmes fils métalliques de façon à former des mailles, chaque maille étant délimitée entre deux premiers fils consécutifs et deux deuxièmes fils consécutifs, les mailles ayant une ouverture de 0,07 mm à 0,15 mm. Le filtre d'entrée et/ou le filtre de sortie comprend un cadre périphérique qui s'étend le long d'au moins une partie du contour du matériau métallique en feuille, en particulier filtre d'entrée et/ou le filtre de sortie est assemblé entre une partie supérieure et une partie inférieure dudit cadre périphérique.

L'échangeur comprend un filtre d'entrée assemblé au premier collecteur d'entrée et un filtre de sortie assemblé au premier collecteur de sortie, le filtre d'entrée et/ou le filtre de sortie présentant, dans un plan de coupe parallèle à la surface d'entrée ou à la surface de sortie du corps d'échange, une forme extérieure sensiblement complémentaire à la forme intérieure présentée par le premier collecteur d'entrée ou le premier collecteur d'entrée dans ledit plan de coupe.

L'échangeur comprend un filtre d'entrée assemblé au corps d'échange au niveau de sa surface d'entrée et dans un mode de réalisation aussi un filtre de sortie assemblé au corps d'échange au niveau de sa surface de sortie, en particulier le filtre d'entrée est assemblé au corps d'échange au niveau de sa surface d'entrée via une pièce intermédiaire.

La pièce intermédiaire est une cornière formée de plusieurs côtés ayant une section en forme de L, chaque côté comprenant une première aile s'étendant parallèlement à la surface d'entrée ou à la surface de sortie et une deuxième aile s'étendant orthogonalement à la surface d'entrée ou à la surface de sortie, le filtre d'entrée et/ou le filtre de sortie étant assemblé sur la première aile et la deuxième aile étant assemblé sur le corps d'échange.

L'échangeur de chaleur est du type à plaques brasées, ledit corps d'échange comprenant plusieurs plaques agencées parallèlement entre elles et à une direction longitudinale, lesdites plaques étant empilées avec espacement de façon à définir entre elles la pluralité de premiers passages et la pluralité de deuxièmes passages.

L'échangeur est un échangeur-réacteur configuré pour la mise en œuvre de réactions catalytiques entre le premier fluide et au moins un matériau catalyseur, les premiers passages du corps d'échange contenant des particules dudit au moins un matériau catalyseur.

Le matériau catalyseur comprend des particules ayant un diamètre équivalent allant d'un diamètre minimal à un diamètre maximal, le matériau métallique en feuille étant un tissé de fils métalliques ayant une ouverture de maille allant de 10 à 85 % dudit diamètre minimal des particules.

L'échangeur est configuré pour la liquéfaction de l'hydrogène en tant que premier fluide, le matériau catalyseur étant configuré pour la conversion de l'ortho-hydrogène en para-hydrogène, en particulier le matériau catalyseur est de l'oxyde de fer (Fe₂O₃).

Selon un autre aspect, l'invention concerne un procédé d'assemblage d'un échangeur selon l'invention, ledit procédé comprenant les étapes suivantes :
a) assemblage, en particulier soudage, d'un filtre de sortie au premier collecteur de sortie,
b) positionnement du premier collecteur de sortie en-dessous du corps d'échange en suivant la direction longitudinale, le corps d'échange étant disposé de sorte que les premiers passages s'étendent parallèlement à la direction longitudinale qui est verticale,
c) assemblage, en particulier soudage, du premier collecteur de sortie muni du filtre de sortie au corps d'échange, ledit filtre de sortie étant agencé en regard de la surface de sortie du corps d'échange,
d) distribution d'un matériau catalyseur dans les premiers passages du corps d'échange,
e) assemblage, en particulier soudage, du premier collecteur d'entrée au corps d'échange, le premier collecteur d'entrée étant agencé en regard de la surface d'entrée du corps d'échange.

L'invention va maintenant être mieux comprise grâce à la description qui va suivre, donnée à titre d'exemple illustratif et non limitatif et faite en référence aux figures ci-annexées parmi lesquelles :
[Fig.1] est une vue tridimensionnelle d'un échangeur de chaleur selon un mode de réalisation de l'invention.
[Fig.2] est une vue tridimensionnelle d'un échangeur de chaleur selon un autre mode de réalisation de l'invention.
[Fig.3] montre des vues partielles en coupe des passages d'un corps d'échange d'un échangeur de chaleur selon un mode de réalisation de l'invention.
[Fig.4] représente un filtre selon un mode de réalisation de l'invention.
[Fig.5] représente un filtre selon un autre mode de réalisation de l'invention.
[Fig.6] schématise la structure d'un filtre selon un autre mode de réalisation de l'invention.
[Fig.7] représente un collecteur et un filtre selon un autre mode de réalisation de l'invention.
[Fig. 8] est une vue partielle d'un échangeur avec dispositif de filtration selon l'art antérieur.

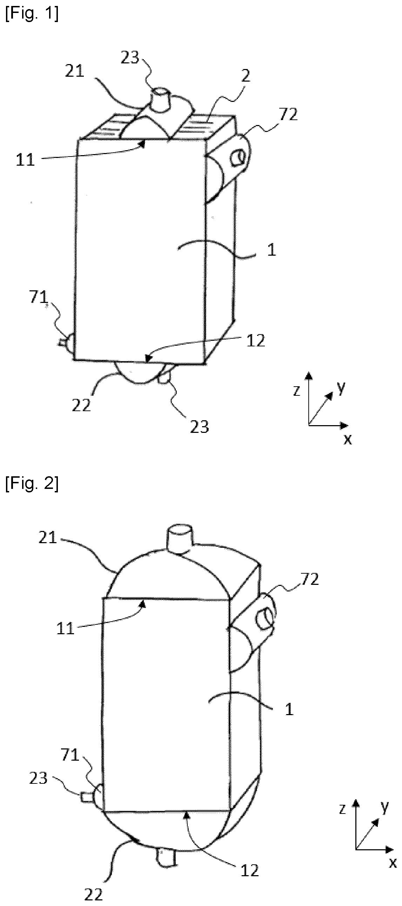

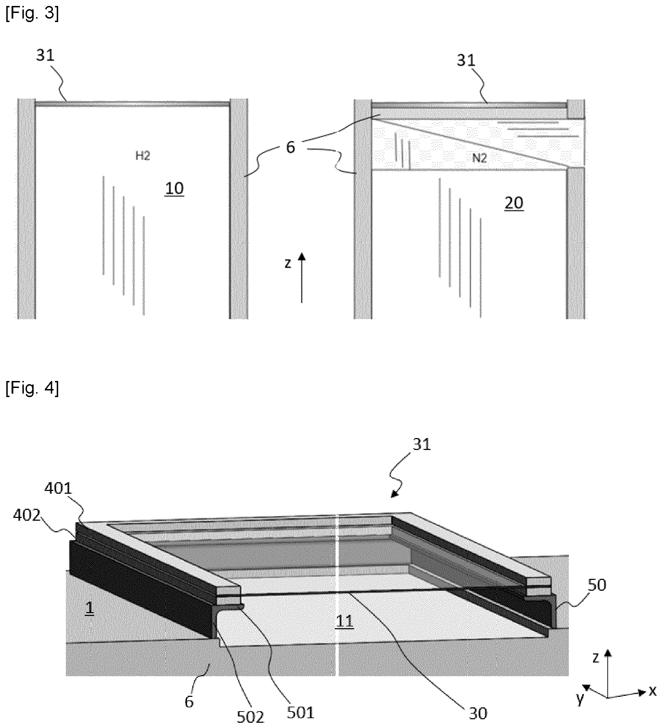

En référence notamment à [Fig. 1], [Fig. 2], Fig. 3], un échangeur de chaleur selon un mode de réalisation de l'invention est du type à plaques et ailettes brasées. Les éléments constitutifs de l'échangeur sont de préférence formés d'aluminium ou d'alliage d'aluminium. L'échangeur comprend un corps d'échange 1 formé d'un empilement de plaques 2. Les plaques 2 s'étendent suivant deux dimensions, longueur et largeur, respectivement suivant la direction longitudinale z et la direction latérale x. Les plaques 2 sont disposées l'une au-dessus de l'autre, parallèlement entre elles, et avec espacement. Elles forment ainsi entre elles des pluralités de passages 10, 20, des premiers passages étant prévus pour l'écoulement d'un premier fluide F1, et des deuxièmes passages étant prévus pour l'écoulement d'au moins un deuxième fluide F2 à mettre en relation d'échange de chaleur indirect avec F1 via les plaques 2. La direction latérale x est perpendiculaire à la direction longitudinale z et parallèle aux plaques 2. Les fluides s'écoulent de préférence dans la longueur de l'échangeur et globalement parallèlement à la direction longitudinale z, la longueur étant grande devant la largeur de l'échangeur. L'écart entre deux plaques 2 successives, correspondant à la hauteur d'un passage, mesurée suivant la direction d'empilement y des plaques 2, est petit devant la longueur et la largeur de chaque plaque successive. La direction d'empilement y est orthogonale aux plaques. Les premiers passages 10 peuvent être agencés, en tout ou partie, en alternance ou de façon adjacente avec tout ou partie des passages 20 de la deuxième série. De préférence, au moins une partie des passages 10, 20 comprend des structures d'échange thermique à ailettes, par exemple des structures ondulées, qui s'étendent suivant la largeur et la longueur des passages de l'échangeur, parallèlement aux plaques 2.

[Fig. 3] illustre des passages du corps d'échange et un mode de réalisation particulier dans lequel les premiers 10 et deuxièmes 20 passages sont prévus respectivement pour l'écoulement d'hydrogène (H₂) en tant que premier fluide et d'azote (N₂) en tant que deuxième fluide. Lorsque l'échangeur est utilisé pour la liquéfaction d'hydrogène, l'hydrogène en tant que premier fluide F1 est le fluide calorigène et l'azote en tant que deuxième fluide F2 est le fluide frigorigène. Notons que d'autres compositions de fluides peuvent être utilisées pour le fluide frigorigène. Chaque passage 10, 20 a une forme parallélépipédique et plate. Le corps 1 comprend des barres de fermeture 6 disposées entre les plaques 2, en périphérie des passages 10, 20. Ces barres 6 assurent l'espacement entre les plaques 2 et l'étanchéité des passages.

De façon connue en soi, l'échangeur comprend des moyens de distribution et d'évacuation 21, 22, 71, 72, appelés collecteurs ou boîtes collectrices, assemblés sur des côtés du corps d'échange 1 et configurés pour distribuer les fluides sélectivement dans les passages 10, 20, ainsi que pour évacuer lesdits fluides desdits passages 10, 20. Chaque collecteur présente des parois périphériques délimitant un volume interne, une extrémité ouverte située du côté du corps d'échange et une tubulure 23 adaptée pour l'alimentation ou l'évacuation du fluide dans ou depuis le volume interne.

Les barres de fermeture 6 n'obturent pas complétement les passages mais laissent des ouvertures libres sur les côtés du corps 1 pour l'entrée ou la sortie des fluides correspondants. Les ouvertures pour l'entrée de chaque fluide F1 ou F2 sont disposées en coïncidence les unes au-dessus des autres. Les ouvertures pour la sortie de chaque fluide F1 ou F2 sont disposées en coïncidence les unes au-dessus des autres. Les ouvertures d'entrée 21 des premiers passages 10 sont réunies fluidiquement dans un premier collecteur d'entrée 21. Les ouvertures de sortie des premiers passages 10 sont réunies fluidiquement dans un premier collecteur de sortie 22. Les ouvertures d'entrée des deuxièmes passages 20 sont réunies fluidiquement dans un deuxième collecteur d'entrée 71. Les ouvertures de sortie des deuxièmes passages 20 situées les unes au-dessus des autres sont réunies fluidiquement dans un deuxième collecteur de sortie 72.

Comme on le voit sur [Fig. 1] ou [Fig. 2], le corps d'échange 1 présente une surface d'entrée 11 au niveau de laquelle les premiers passages 10 sont reliés fluidiquement au premier collecteur d'entrée 21, c'est-à-dire que les passages 10 débouchent par leurs ouvertures d'entrée au niveau de ladite surface d'entrée. De même, le corps d'échange 1 présente une surface de sortie 12 au niveau de laquelle les premiers passages 10 sont reliés fluidiquement au premier collecteur de sortie 22.

Etant précisé que les caractéristiques de l'invention données dans la présente description en lien avec le premier fluide F1, c'est-à-dire concernant notamment les premiers passages, les surfaces d'entrée et de sortie..., sont aussi applicables en tout ou partie au deuxième fluide F2. Une solution de filtration selon l'invention est donc envisageable pour tout ou partie des fluides circulant dans l'échangeur.

Selon une possibilité illustrée sur [Fig. 1], les collecteurs d'entrée et de sortie 21, 22, 71, 72 sont de forme semi-tubulaire, i. e. semi-cylindrique, et ne recouvre que partiellement les côtés du corps sur lesquels ils sont disposés. Des ondes de distribution sont agencées entre les plaques 2 successives sous forme de tôles ondulées qui s'étendent à partir des ouvertures d'entrée ou de sortie et assurent un guidage et une répartition uniforme des fluides sur toute la largeur des passages 10, 20.

Selon une autre possibilité illustrée sur [Fig. 2], les collecteurs d'entrée et de sortie 21, 22, 71, 72 ont une forme de dômes recouvrant totalement les côtés du corps sur lesquels ils sont disposés.

Dans les modes de réalisation illustrés, le premier collecteur d'entrée 21 pour le premier fluide et le deuxième collecteur de sortie 72 sont situés à une même extrémité de l'échangeur, les fluides F1, F2 circulant ainsi à contre-courant dans le corps 1. De préférence, l'axe longitudinal est vertical lorsque l'échangeur 1 est en fonctionnement. Le premier collecteur d'entrée 21 pour le premier fluide est situé à une extrémité supérieure de l'échangeur et le premier collecteur de sortie 22 pour le premier fluide est situé à une extrémité inférieure de l'échangeur. Le premier fluide F1 s'écoule globalement verticalement et dans le sens descendant. D'autres directions et sens d'écoulement des fluides F1, F2 sont bien entendu envisageables, sans sortir du cadre de la présente invention.

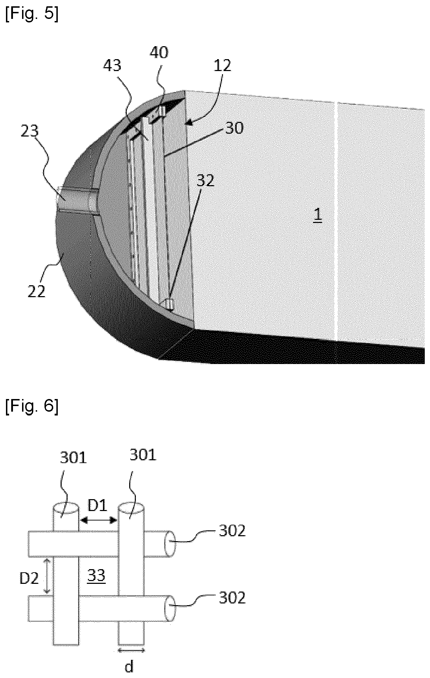

Comme on le voit sur [Fig. 4] et [Fig. 5], l'échangeur selon l'invention comprend en outre un filtre d'entrée 31 agencé en regard de la surface d'entrée 11 du corps d'échange 1 et/ou un filtre de sortie 32 agencé en regard de la surface de sortie 12 du corps d'échange 1. En d'autres termes, les filtres d'entrée et de sortie sont agencés de façon à faire de façon à faire face aux surfaces d'entrée et de sortie respectivement. Le filtre d'entrée 31 et/ou le filtre de sortie 32 comprend un matériau métallique en feuille 30 choisi parmi une toile métallique un non-tissé de fibres métalliques, un fritté de poudre métallique ou un fritté de fibres métalliques, une plaque microperforée.

Les termes « toile métallique » s'entendent d'un produit manufacturé obtenu par le tissage de fils métallique, c'est-à-dire l'entrelacement de fils de manière à obtenir une toile tissée métallique, i. e. un tissu métallique. Notons que les termes « toile métallique » peuvent aussi couvrir un produit manufacturé obtenu par le soudage de fils métalliques, i. e. une toile soudée formée de fils qui se croisent et sont soudés par point à l'endroit où ils se croisent.

Par « non-tissé », ou intissé, on entend un produit manufacturé formés de fibres disposées en feuille, orientées de manière aléatoire ou directionnelle, et liées entre elles par des procédés mécaniques, chimiques ou thermiques, ou par combinaison de ces procédés, en excluant le tissage. En particulier, le non-tissé peut être formé de fibres liées par friction, cohésion ou adhésion.

Le terme « fritté » désigne un matériau obtenu par frittage de poudre ou de fibres métalliques, c'est-à-dire par chauffage d'une poudre ou de fibres sans les mener jusqu'à la fusion. Sous l'effet de la chaleur, les grains ou fibres se soudent entre eux, ce qui forme la cohésion du matériau.

Une plaque microperforée désigne une plaque comprenant des micro perforations, c'est-à-dire des orifices traversants de dimension micrométrique, c'est-à-dire inférieure au millimètre.

Notons que chacun des filtres peut comprendre une ou plusieurs couches dudit matériau métallique en feuille.

De préférence, chacun des filtres comprend une seule couche dudit matériau métallique en feuille, i. e. est formé d'un matériau monocouche. La fabrication du filtre s'en trouve simplifie. Cela permet également un contrôle plus précis et reproductible de la transparence ou de la porosité du filtre, ainsi que de la dimension de ses ouvertures.

L'utilisation d'une toile métallique, d'un non-tissé de fibres métalliques, d'un fritté métallique ou d'une plaque microperforée conduit à un matériau dont les ouvertures, ou pores ouverts, peuvent être dimensionnées de façon à permettre l'écoulement du fluide tout en empêchant le passage des particules solides que l'on souhaite retenir dans le corps d'échange ou dont on souhaite éviter l'introduction dans ledit corps. Ces matériaux offrent un bon compromis entre transparence au fluide, efficacité de filtration, grâce au faibles dimensions d'ouvertures qui peuvent être obtenues, et rigidité du filtre. Grâce à leur structure en feuille, les filtres peuvent être positionnés au plus près des passages du corps d'échange, permettent de réduire significativement le volume de catalyseur utilisé dans les échangeurs catalytiques puisque les collecteurs n'ont plus à être remplis de catalyseur. La fabrication et la mise en œuvre de ces filtres sont simplifiées par rapport à celles des cartouches filtrantes ou des filtres à plusieurs couches frittées ensemble de l'art antérieur.

La présente invention est particulièrement avantageuse lorsqu'elle est mise en œuvre dans un échangeur de chaleur à plaques et ailettes brasées, du fait de sa simplicité de mise en œuvre et d'assemblage. Notons que d'autres types d'échangeurs peuvent toutefois être utilisés, tels des échangeurs à plaques, des échangeurs à tubes et à calandre (« shell and tube » en anglais), ou des assemblages de type « core in kettle », c'est-à-dire des échangeurs à plaques ou à plaques et ailettes noyés dans une calandre dans laquelle se vaporise le fluide frigorigène. Dans le cas où les échangeurs sont des échangeurs à tubes, les premiers et deuxièmes passages peuvent être formés par les espaces dans, autour et entre les tubes.

De préférence, lorsque le matériau métallique en feuille est une toile métallique ou une plaque microperforée, il présente une densité surfacique d'ouverture allant de 15 à 35 %, de préférence de 17 à 22%. La densité surfacique d'ouverture, i. e. la transparence de la toile ou de la plaque, est définie comme le rapport de l'aire des ouvertures ou des perforations à l'aire totale de la toile ou de la plaque microperforée respectivement. Ces plages de valeurs offrent un bon compromis entre rigidité du matériau, ce qui lui confère une bonne résistance mécanique, et transparence au fluide afin de minimiser les pertes de charges.

S'agissant des matériaux métalliques en feuille autres qu'une toile métallique ou une plaque microperforée, ils présentent de préférence une densité volumique de pores, i. e. une porosité, d'au moins 75%, de préférence encore supérieure à 90%, et avantageusement inférieure ou égale à 98%. Ces plages de valeurs permettent de retenir les fines particules solides tout en offrant une bonne résistance mécanique ainsi qu'une perte de charges modérée pour le fluide. A noter que la densité volumique de pores est définie comme le rapport entre le volume des vides du matériau et le volume total du matériau. Notons que les vides s'entendent de pores ouverts, c'est-à-dire communiquant fluidiquement avec l'environnement extérieur dans lequel se trouve le matériau.

De préférence, le matériau métallique en feuille 30 est formé en tout ou partie d'acier, en particulier d'acier inoxydable, de nickel ou d'alliage de nickel, en particulier d'un alliage de type Inconel comprenant de 50% à 75% en poids de nickel. Ces matériaux offrent l'avantage de présenter une bonne résistance mécanique, une bonne ténacité, ainsi qu'une bonne résilience aux températures cryogéniques. Ces propriétés sont appréciables dans le contexte de résistance à la pression dynamique du fluide et rétention du poids du catalyseur notamment lorsque le filtre est situé en partie inférieure de l'échangeur.

Selon un mode de réalisation préféré de l'invention, le matériau métallique en feuille 30 est une toile métallique formée de fils métalliques 301, 302. Plus précisément, le matériau comprend un entrelacement d'au moins une série de premiers fils 301 métalliques avec une série de deuxièmes fils 302 métalliques de façon à former des mailles 33 ouvertes. Selon le mode de tissage des fils, les mailles peuvent être de forme carrée, rectangulaire ou triangulaire. Les premiers fils 301 et deuxièmes fils 302 métalliques peuvent présenter des caractéristiques identiques, i. e. matériau, diamètre..., mais pas nécessairement.

[Fig. 6] schématise un exemple de tissage dans lequel les premiers fils et deuxièmes fils se croisent alternativement un dessous et un dessus. D'autres tissages sont possible, par exemple des fils se croisant alternativement deux dessous et deux dessus, un dessous et deux dessus...

Rappelons que les caractéristiques énoncées dans la présente demande pour une toile s'appliquent aussi au cas où les fils sont assemblés par soudage.

L'utilisation d'une toile métallique permet un contrôle précis et reproductible des caractéristiques du filtre, grâce à la géométrie des mailles qui est parfaitement contrôlée lors de l'opération de tissage. La régularité des mailles offre un degré de transparence du filtre homogène sur toute sa surface, ce qui évite de nuire aux performances de l'échangeur grâce à une répartition homogène du débit de fluide à travers le filtre. En outre, la toile métallique permet d'obtenir une densité surfacique d'ouverture définie par les mailles pour bloquer de façon optimale les particules visées et limiter les pertes de charges pour le fluide la traversant. Il offre également de bonnes propriétés de planéité, ce qui permet de pouvoir fixer la toile sans déformation excessive dans un cadre pouvant être assemblé au corps ou au collecteur, en particulier un cadre qui est soit brasé sur le corps de l'échangeur, soit soudé dans le collecteur.

De préférence, lesdits fils 301, 302 ont un diamètre d allant de 0,10 à 0,30 mm, en particulier de 0,10 à 0,25 mm, ce qui permet de conférer à la toile une bonne tenue mécanique par la résistance à la traction de ses fils. De préférence encore, lesdits fils peuvent avoir un diamètre allant de 0,12 à 0,18 mm.

Chaque maille 33 étant délimitée entre deux premiers fils 301 consécutifs et deux deuxièmes fils 302 consécutifs, les mailles ayant de préférence une ouverture de 0,07 mm à 0,15 mm. Le dimensionnement de l'ouverture des mailles est défini de telle manière à retenir les particules solides de taille supérieure que l'on veut arrêter.

Dans le cas de mailles carrées ou rectangulaires, comme montré sur [Fig. 6], l'ouverture de maille est définie comme la distance D1 entre deux premiers fils 301 consécutifs et/ou la distance D2 entre deux deuxièmes fils 302 consécutifs. Dans le cas de mailles triangulaires (non illustré), l'ouverture de maille est définie comme le diamètre de la sphère tangente insérée dans la maille.

De préférence, le matériau métallique en feuille 30 présent une épaisseur allant de 0,2 à 0,75 mm. Cette épaisseur confère au matériau une tenue mécanique suffisante. Pour une toile métallique, l'épaisseur résulte du diamètre des fils et du mode d'assemblage des mailles constituées.

Selon une possibilité, le matériau métallique en feuille est un fritté de poudres ou de fibres métalliques. En particulier, on peut utiliser des poudres d'acier inoxydable ou de bronze qui sont liées par diffusion atomique à une température inférieure à la température de fusion du matériau.

Selon une autre possibilité, le matériau métallique en feuille est une plaque microperforée d'une pluralité d'orifices de forme préférentiellement circulaire dont le diamètre est avantageusement compris entre 0,07 mm et 0,15 mm. De préférence, la plaque présente une épaisseur comprise entre 0,2 mm et 0,5 mm. De préférence, les orifices sont répartis de façon uniforme sur la plaque microperforée.

Selon un mode de réalisation avantageux, montré sur [Fig. 4] ou [Fig. 5], le filtre d'entrée 31 et/ou le filtre de sortie 32 comprend un cadre périphérique 40 qui s'étend le long d'au moins une partie du contour du matériau métallique en feuille 30. En particulier, le cadre 40 peut être formé d'une partie supérieure 401 et d'une partie inférieure 402 superposées et entre lesquelles le filtre d'entrée 31 ou le filtre de sortie 32 est fixé. Le cadre périphérique 40 permet de rigidifier le filtre et forme un moyen de fixation du matériau en feuille 30 aux collecteurs et/ou au corps d'échange. Dans le cas où le cadre est formé de deux parties, celles-ci peuvent être assemblées notamment par rivetage, soudage ou vissage. De préférence, le cadre 40 est formé d'aluminium ou d'un alliage d'aluminium, de préférence du même matériau que les autres éléments constitutifs de l'échangeur et des collecteurs. Ainsi, le cadre peut être soudé dans le collecteur et/ou sur le corps de l'échangeur. Le cadre peut être formé d'un assemblage de barres dont la largeur, mesurée parallèlement à la direction latérale x ou à la direction d'empilement y selon l'orientation de la barre considérée, est comprise entre 12 et 25 mm et dont la hauteur, mesurée suivant la direction longitudinale z, est comprise entre 3 à 7 mm. Ces valeurs permettent d'avoir suffisamment de matière pour y prévoir le passage de moyens d'assemblage, tel des moyens de rivetage ou de boulonnage, tout en évitant de réduire de manière trop importante la section de passage de fluide par le filtre.

Eventuellement, les filtres 31, 32 peuvent comprendre une ou plusieurs barres de renfort 43 s'étendant entre deux bords opposés du cadre 40. Cela permet de rigidifier le filtre lorsque le corps d'échange présente des surfaces d'entrée ou de sortie plus importantes. Un exemple est montré sur [Fig. 5].

Selon l'invention, les filtres d'entrée 31 ou de sortie 32 sont assemblés au corps d'échange, en regard de la surface d'entrée ou de sortie à filtrer.

Cet assemblage peut être réalisé directement sur le corps ou via une pièce intermédiaire 50, de préférence en aluminium ou alliage d'aluminium de même nature qu le corps d'échangeur, comme montré sur [Fig. 4]. La pièce intermédiaire est préférentiellement fixée par soudage sur le corps. Le cadre est préférentiellement soudé à la pièce intermédiaire. Un avantage qu'offre l'utilisation d'une pièce intermédiaire est la possibilité de démonter le filtre pour être remplacé par exemple, en désolidarisant le cadre de la pièce intermédiaire. En l'absence de pièce intermédiaire, il faudrait découper le cadre au ras des barres de fermeture de l'échangeur, ce qui risque de l'endommager.

Dans les applications où l'échangeur doit être rempli de catalyseur, elle permet aussi de positionner un bac, de préférence de forme rectangulaire, destiné au remplissage. De préférence, la pièce intermédiaire est une pièce de type cornière, c'est-à-dire une pièce formée de profilés dont la section forme un L. De préférence, la pièce comprend deux paires de côtés opposés. [Fig. 4] montre un exemple de cornière avec un des côtés non représenté pour visualiser la partie interne du dispositif. De préférence, chaque côté de la cornière comprend une première aile 501 qui s'étend parallèlement au filtre et une deuxième aile 502 qui s'étend perpendiculairement au filtre. De préférence, la longueur de la première aile 501 de la pièce sur laquelle repose le cadre périphérique, mesurée parallèlement à la direction latérale x ou à la direction d'empilement y selon le cas, est au moins égale à la largeur du cadre. La deuxième aile 502 du L est soudée au corps de l'échangeur 1. En soudant l'extrémité de la deuxième aile 502 de la cornière au ras des barres formant l'ouverture de l'échangeur, comme illustré par [Fig. 4], cette solution permet avantageusement de ne pas devoir élargir le collecteur qui vient coiffer le filtre, le collecteur étant soudé au corps de l'échangeur. En l'absence de pièce intermédiaire de type cornière, le filtre aurait une surface plus importante afin de pouvoir reposer sur le corps 1. Le collecteur en serait d'autant élargi.

Le collecteur d'entrée ou de sortie peut être assemblé au corps d'échange 1, au filtre, en particulier à son cadre périphérique, ou à chacun de ces éléments.

Selon une possibilité particulièrement avantageuse, le filtre de sortie 32 est fixé au collecteur de sortie 22 et/ou le filtre d'entrée 31 est fixé au premier collecteur d'entrée 21. Ainsi, lors de la fabrication de l'échangeur, le ou les filtres peuvent être assemblés à leur collecteur respectif avant assemblage du collecteur sur le corps, ce qui offre l'avantage de ne pas avoir à souder le filtre sur le corps de l'échangeur en plus du soudage du collecteur. Toute soudure sur un corps brasé présente en effet un risque de surchauffe locale pouvant entrainer des décohésions des surfaces brasées.

Pour les applications d'échangeurs catalytiques, on pourra préférer la combinaison des deux types d'assemblage, à savoir un filtre soudé dans le collecteur de sortie, le collecteur étant lui-même soudé en partie inférieure du corps d'échangeur, et un filtre d'entrée soudé sur le corps d'échangeur en fin de remplissage de catalyseur.

Pour les échangeurs où la fonction de filtre est d'éviter l'entrée de particules dans l'échangeur, le filtre d'entrée peut être fixé soit dans le collecteur d'entrée soit sur le corps de l'échangeur.

Dans le cas d'un filtre d'entrée ou de sortie positionné dans le collecteur, il présente, dans un plan de coupe parallèle à la surface d'entrée ou à la surface de sortie du corps d'échange 1, une forme extérieure sensiblement complémentaire à la forme intérieure présentée par le premier collecteur d'entrée 21 ou le premier collecteur de sortie 22 dans ledit plan de coupe.

Avantageusement, les dimensions du filtre sont légèrement inférieures à celles de l'extrémité ouverte du collecteur de manière à ce que le filtre soit positionné à l'intérieur du collecteur, en retrait par rapport à son extrémité ouverte. De préférence, le filtre est dimensionné de manière à être positionné à l'intérieur du collecteur avec un retrait de 20 à 25 mm par rapport à l'extrémité ouverte du collecteur. L'avantage d'un faible retrait tel qu'indiqué est que le volume compris entre le corps de l'échangeur et le filtre du collecteur reste limité, ce qui permet de limiter le volume de catalyseur utilisé dans le cas d'un échangeur catalytique. Ce retrait offre par ailleurs un bon compromis pour laisser la place d'un cordon de soudure réalisé à l'angle formé entre le filtre et la paroi du collecteur sans empiéter sur le chanfrein classiquement réalisé en périphérie de la bordure du collecteur. Pour des raisons de faisabilité et d'accessibilité, le cordon de soudure d'étanchéité est de préférence placé du côté de la section ouverte du collecteur.

Avantageusement, le collecteur d'entrée et/ou de sortie est de forme semi-cylindrique. Le filtre est maintenu en position grâce à la diminution progressive des dimensions internes du collecteur. Le rayon de la surface interne du collecteur permet l'encastrement du filtre à l'intérieur ce qui permet avantageusement de bloquer le filtre pour la préparation de soudage en périphérie du filtre sur la surface interne du collecteur.

[Fig. 7] illustre le cas où le collecteur présente une extrémité ouverte de forme intérieure rectangulaire, de longueur L et de largeur l. Le filtre présente une forme extérieure rectangulaire soient inférieures aux dimensions de l'extrémité ouverte du collecteur d'un écart e compris entre 5 et 15 mm.

Selon le cas, le collecteur d'entrée et/ ou le collecteur de sortie peuvent recouvrir la totalité du corps d'échange ou bien ne recouvrir qu'une partie de celui-ci.

La présente invention est particulièrement avantageuse dans le cas où l'échangeur est un échangeur-réacteur configuré pour la mise en œuvre de réactions catalytiques entre le premier fluide F1 et au moins un matériau catalyseur, les premiers passages du corps d'échange 3 contenant ledit au moins un matériau catalyseur sous forme de particules. En particulier, l'échangeur est configuré pour la liquéfaction de l'hydrogène en tant que premier fluide F1, le matériau catalyseur étant configuré pour la conversion de l'ortho-hydrogène en para-hydrogène, en particulier le matériau catalyseur est de l'oxyde de fer (Fe₂O₃). En fonctionnement, l'hydrogène est introduit à l'état gazeux par le premier collecteur d'entrée 21 et s'écoule dans les premiers passages 10 pour y être refroidi contre un courant d'azote liquide s'écoulant dans les deuxième passages 20. L'hydrogène est évacué à l'état liquide par le premier collecteur de sortie 22.

De préférence, le matériau catalyseur comprend des particules ayant un diamètre équivalent allant d'un diamètre minimal de particules à un diamètre maximal de particules. De préférence, le diamètre minimal est compris entre 0,2 et 0,4 mm. De préférence, le diamètre maximal est compris entre 0,5 et 0,7 mm. De préférence encore, les particules du matériau catalyseur présentent un diamètre équivalent allant de 0,2 à 0,7 mm.

De préférence, le matériau métallique en feuille 30 est un tissé de fils métalliques ayant une ouverture de maille représentant entre 30% et 70% du diamètre minimal des particules. Ces ratios sont définis de façon à arrêter les très fines particules ou poussières issues de l'abrasion des particules de catalyseur lors du remplissage ou en fonctionnement, tout en offrant un compromis satisfaisant du point de vue des pertes de charges

Par « diamètre équivalent » d'une particule non sphérique, on entend dans la présente demande le diamètre de la sphère de même volume que ladite particule.

L'invention concerne également un procédé d'assemblage d'un échangeur catalytique dont la mise en œuvre est rendue plus simple et mieux contrôlée grâce à l'invention. Un filtre de sortie 32 est assemblé au premier collecteur de sortie 22. L'ensemble collecteur-filtre de sortie est ensuite assemblé au corps d'échange 1. Le corps d'échange 1 est positionné verticalement et le collecteur de sortie 22 est assemblé en-dessous du corps d'échange 1 en suivant la direction verticale ascendante z. On procède ensuite au remplissage des premiers passages 10 avec le catalyseur. Le filtre de sortie 32 positionné en partie inférieure du corps permet de retenir le catalyseur dans les passages. Le remplissage peut éventuellement être réalisé au moyen d'un bac, qui peut être de forme rectangulaire, positionné sur le corps d'échange 1, de façon à faire face aux ouvertures de passages à remplir. Le bac est retiré une fois le remplissage terminé. Le premier collecteur d'entrée 21 est assemblé au corps d'échange 1.

En outre, l'échangeur avantageusement comprend un filtre d'entrée 31. On assemble le filtre d'entrée 31 au corps d'échange 1 en regard de la surface d'entrée 11, éventuellement avec la pièce intermédiaire 50 disposée entre le filtre 31 et le corps 1. Puis le premier collecteur d'entrée 21 est assemblé au corps d'échange 1 par-dessus le filtre d'entrée 31.

Pour un échangeur dans lequel on souhaite éviter l'intrusion de poussières venant du circuit amont de fluide, on peut envisager d'assembler le filtre d'entrée 31 dans le premier collecteur d'entrée 21 puis d'assembler l'ensemble collecteur-filtre d'entrée au corps d'échange 1.

Notons que dans le cadre de l'invention, l'assemblage des filtres d'entrée et/ou de sortie est de préférence réalisé sur le corps d'échange 1 préalablement brasé. De préférence, les assemblages de filtres au corps ou aux collecteurs est réalisé par soudage.

Ce procédé d'assemblage est particulièrement bien adapté aux échangeurs dont des passages doivent être remplis de particules de catalyseur. Le remplissage des passages avec les particules de catalyseur est effectué après que le corps d'échange muni du collecteur de sortie ait été positionné verticalement, ce qui permet un remplissage gravitaire avec le catalyseur et un meilleur contrôle de la répartition du catalyseur entre les différents passages.

Notons que pour un besoin de bloquer l'introduction d'éventuelles particules dans les passages de l'échangeur, l'agencement d'un filtre de sortie du côté de la surface de sortie du corps d'échangeur est optionnel. Notons par ailleurs qu'un autre filtre d'entrée et/ou un autre filtre de sortie conformes à l'invention peuvent également être agencés de façon à assurer une ou plusieurs des fonctions décrites dans la présente demande pour les deuxième passages 20.

## Revendications

1. Echangeur-réacteur du type à plaques brasées configuré pour la mise en œuvre de réactions catalytiques entre un premier fluide (F1) et au moins un matériau catalyseur, ledit échangeur-réacteur comprenant :
- un corps d'échange (1) comprenant plusieurs plaques (2) agencées parallèlement entre elles et à une direction longitudinale (z), lesdites plaques (2) étant empilées avec espacement de façon à définir entre elles une pluralité de premiers passages (10) pour l'écoulement du premier fluide (F1) et une pluralité de deuxièmes passages (20) pour l'écoulement d'un deuxième fluide (F2) à mettre en relation d'échange de chaleur avec le premier fluide (F1), les premiers passages (10) du corps d'échange (1) contenant des particules dudit au moins un matériau catalyseur,
- un premier collecteur d'entrée (21) pour introduire le premier fluide (F1) dans les premiers passages (10),
- un premier collecteur de sortie (22) pour évacuer le premier fluide (F1) des premiers passages (10),
le corps d'échange (1) ayant une surface d'entrée (11) au niveau de laquelle les premiers passages (10) sont reliés fluidiquement au premier collecteur d'entrée (21) et une surface de sortie (12) au niveau de laquelle les premiers passages (10) sont reliés fluidiquement au premier collecteur de sortie (22),
l'échangeur-réacteur comprenant en outre un filtre d'entrée (31) agencé en regard de la surface d'entrée (11) du corps d'échange (1) et un filtre de sortie (32) agencés en regard de la surface de sortie (12) du corps d'échange (1), le filtre d'entrée (31) et le filtre de sortie (32) comprennent un matériau métallique en feuille (30) choisi parmi une toile métallique, un non-tissé de fibres métalliques, un fritté de poudre métallique ou de fibres métalliques, une plaque microperforée, **caractérisé en ce que** le filtre d'entrée (31) est assemblé au corps d'échange (1) au niveau de sa surface d'entrée (11).

2. Echangeur selon la revendication 1, **caractérisé en ce que** le matériau métallique en feuille (30) présente une densité surfacique d'ouverture allant de 15 à 35 % ou une densité volumique de pores allant de 75 à 98 %.

3. Echangeur selon l'une des revendications 1 ou 2, **caractérisé en ce que** le matériau métallique en feuille (30) est formé en tout ou partie d'acier, en particulier d'acier inoxydable, de nickel ou d'alliage de nickel, en particulier d'alliage comprenant de 50% à 75% en poids de nickel.

4. Echangeur selon l'une des revendications précédentes, **caractérisé en ce que** le matériau métallique en feuille (30) présente une épaisseur de 0,20 à 0,75 mm.

5. Echangeur selon l'une des revendications précédentes, **caractérisé en ce que** le matériau métallique en feuille est formé d'une ou plusieurs couches dudit matériau.

6. Echangeur selon l'une des revendications précédentes, **caractérisé en ce que** le matériau métallique en feuille (30) est un tissé de fils métalliques (301, 302), lesdits fils (301, 302) ayant un diamètre de 0,10 à 0,30 mm, de préférence de 0,10 à 0,25 mm.

7. Echangeur selon la revendication 6, **caractérisé en ce que** le matériau métallique en feuille (30) comprend au moins une série de premiers fils (301) métalliques entrelacés avec une série de deuxièmes fils (302) métalliques de façon à former des mailles (33), chaque maille (33) étant délimitée entre deux premiers fils (301) consécutifs et deux deuxièmes fils (302) consécutifs, les mailles (33) ayant une ouverture de 0,07 mm à 0,15 mm.

8. Echangeur selon l'une des revendications précédentes, **caractérisé en ce que** le filtre d'entrée (31) et/ou le filtre de sortie (32) comprend un cadre périphérique (40) qui s'étend le long d'au moins une partie du contour du matériau métallique en feuille (30), en particulier filtre d'entrée (31) et/ou le filtre de sortie (32) est agencé entre une partie supérieure (401) et une partie inférieure (402) dudit cadre périphérique (40).

9. Echangeur selon l'une des revendications précédentes, **caractérisé en ce qu'**il comprend un filtre de sortie (32) assemblé au corps d'échange (1) au niveau de sa surface de sortie (12) ou un filtre de sortie (32) assemblé au premier collecteur de sortie (22, et présentant, dans un plan de coupe parallèle à la surface d'entrée ou à la surface de sortie du corps d'échange (1), une forme extérieure sensiblement complémentaire à la forme intérieure présentée par le premier collecteur de sortie (22) dans ledit plan de coupe.

10. Echangeur selon l'une des revendications précédentes, **caractérisé en ce qu'**il comprend un filtre d'entrée (31) assemblé au corps d'échange (1) au niveau de sa surface d'entrée (11) via une pièce intermédiaire (50).

11. Echangeur selon la revendication 10, **caractérisé en ce que** la pièce intermédiaire (50) est une cornière dont les côtés ont une section en forme de L, chaque côté comprenant une première aile (501) s'étendant parallèlement à la surface d'entrée (11) ou à la surface de sortie (12) et une deuxième aile (502) s'étendant orthogonalement à la surface d'entrée (11) ou à la surface de sortie (12), le filtre d'entrée (31) et/ou le filtre de sortie (32) étant assemblé sur la première aile 501 et la deuxième aile (502) étant assemblé sur le corps d'échange (1).

12. Echangeur selon l'une des revendications précédentes, **caractérisé en ce que** le matériau catalyseur comprend des particules ayant un diamètre équivalent allant d'un diamètre minimal à un diamètre maximal, le matériau métallique en feuille (30) étant un tissé de fils métalliques (301, 302) ayant une ouverture de maille allant de 10 à 85 % dudit diamètre minimal des particules.

13. Echangeur selon l'une des revendications précédentes, **caractérisé en ce qu'**il est configuré pour la liquéfaction de l'hydrogène en tant que premier fluide (F1), le matériau catalyseur étant configuré pour la conversion de l'ortho-hydrogène en para-hydrogène, en particulier le matériau catalyseur est de l'oxyde de fer (Fe₂O₃).

14. Procédé d'assemblage d'un échangeur tel que défini par l'une des revendications 1 à 13, ledit procédé comprenant les étapes suivantes :
a) assemblage, en particulier soudage, d'un filtre de sortie (32) au premier collecteur de sortie (22),
b) positionnement du premier collecteur de sortie (22) en-dessous du corps d'échange (1) en suivant la direction longitudinale (z), le corps d'échange (1) étant disposé de sorte que les premiers passages (10) s'étendent parallèlement à la direction longitudinale (z) qui est verticale,
c) assemblage, en particulier soudage, du premier collecteur de sortie (22) muni du filtre de sortie (32) au corps d'échange (1), ledit filtre de sortie (32) étant agencé en regard de la surface de sortie (12) du corps d'échange (1),
d) distribution d'un matériau catalyseur dans les premiers passages (10) du corps d'échange (1),
e) après remplissage des premiers passages (10) de matériau catalyseur, assemblage, en particulier soudage, d'un filtre d'entrée (31) au corps d'échange (1) en regard de la surface d'entrée (11),
f) assemblage, en particulier soudage, du premier collecteur d'entrée (21) au corps d'échange (1) par-dessus le filtre d'entrée (31).

## Patentansprüche

1. Gelöteter Plattenwärmetauscher-Reaktor, konfiguriert für die Durchführung katalytischer Reaktionen zwischen einem ersten Fluid (F1) und mindestens einem Katalysatormaterial, wobei der Wärmeübertrager-Reaktor umfasst :
- einen Austauschkörper (1), umfassend mehrere Platten (2), die parallel zueinander und zu einer Längsrichtung (z) angeordnet sind, wobei die Platten (2) mit Abstand gestapelt sind, um zwischen ihnen eine Vielzahl von ersten Durchgängen (10) für den Fluss des ersten Fluids (F1) und eine Vielzahl von zweiten Durchgängen (20) für den Fluss eines zweiten Fluids (F2) zu definieren, das mit dem ersten Fluid (F1) in Wärmeaustauschbeziehung gebracht werden soll, wobei die ersten Durchgänge (10) des Austauschkörpers (1) Partikel des mindestens einen Katalysatormaterials enthalten,
- einen ersten Einlasskollektor (21) zum Einführen des ersten Fluids (F1) in die ersten Durchgänge (10),
- einen ersten Auslasskollektor (22) zum Abführen des ersten Fluids (F1) aus den ersten Durchgängen (10),
wobei der Austauschkörper (1) eine Einlassfläche (11) aufweist, an der die ersten Durchgänge (10) fluidisch mit dem ersten Einlasskollektor (21) verbunden sind, und eine Auslassfläche (12) aufweist, an der die ersten Durchgänge (10) fluidisch mit dem ersten Auslasskollektor (22) verbunden sind,
wobei der Wärmeübertrager-Reaktor ferner einen Einlassfilter (31) umfasst, der gegenüber der Einlassfläche (11) des Austauschkörpers (1) angeordnet ist, und einen Auslassfilter (32), der gegenüber der Auslassfläche (12) des Austauschkörpers (1) angeordnet ist, wobei der Einlassfilter (31) und der Auslassfilter (32) ein metallisches Folienmaterial (30) umfassen, das ausgewählt ist aus einem Metallgewebe, einem Vlies aus Metallfasern, einem Sinterkörper aus Metallpulver oder Metallfasern, einer mikroperforierten Platte, **dadurch gekennzeichnet, dass** der Einlassfilter (31) an dem Austauschkörper (1) an dessen Einlassfläche (11) montiert ist.

2. Wärmetauscher nach Anspruch 1, **dadurch gekennzeichnet, dass** das metallische Folienmaterial (30) eine Oberflächendichte der Öffnung von 15 bis 35 % oder eine volumetrische Porendichte von 75 bis 98 % aufweist.

3. Wärmetauscher nach einem der Ansprüche 1 oder 2, **dadurch gekennzeichnet, dass** das metallische Folienmaterial (30) ganz oder teilweise aus Stahl, insbesondere nichtrostendem Stahl, Nickel oder einer Nickellegierung, insbesondere einer Legierung, die 50 Gew.-% bis 75 Gew.-% Nickel enthält, gebildet ist.

4. Wärmetauscher nach einem der vorhergehenden Ansprüche, **dadurch gekennzeichnet, dass** das metallische Folienmaterial (30) eine Dicke von 0,20 bis 0,75 mm aufweist.

5. Wärmetauscher nach einem der vorhergehenden Ansprüche, **dadurch gekennzeichnet, dass** das metallische Folienmaterial aus einer oder mehreren Schichten des Materials gebildet ist.

6. Wärmetauscher nach einem der vorhergehenden Ansprüche, **dadurch gekennzeichnet, dass** das metallische Folienmaterial (30) ein Gewebe aus Metalldrähten (301, 302) ist, wobei die Drähte (301, 302) einen Durchmesser von 0,10 bis 0,30 mm, vorzugsweise von 0,10 bis 0,25 mm, aufweisen.

7. Wärmetauscher nach Anspruch 6, **dadurch gekennzeichnet, dass** das metallische Folienmaterial (30) mindestens eine Reihe erster Metalldrähte (301) umfasst, die mit einer Reihe zweiter Metalldrähte (302) so verflochten sind, dass Maschen (33) gebildet werden, wobei jede Masche (33) zwischen zwei aufeinanderfolgenden ersten Drähten (301) und zwei aufeinanderfolgenden zweiten Drähten (302) begrenzt ist, wobei die Maschen (33) eine Öffnung von 0,07 mm bis 0,15 mm aufweisen.

8. Wärmetauscher nach einem der vorhergehenden Ansprüche, **dadurch gekennzeichnet, dass** der Einlassfilter (31) und/oder der Auslassfilter (32) einen peripheren Rahmen (40) umfasst, der sich entlang mindestens eines Teils der Kontur des metallischen Folienmaterials (30) erstreckt, insbesondere der Einlassfilter (31) und/oder der Auslassfilter (32) zwischen einem oberen Teil (401) und einem unteren Teil (402) des peripheren Rahmens (40) angeordnet ist.

9. Wärmetauscher nach einem der vorhergehenden Ansprüche, **dadurch gekennzeichnet, dass** er einen Auslassfilter (32) umfasst, der an dem Austauschkörper (1) an dessen Auslassfläche (12) montiert ist, oder einen Auslassfilter (32), der an dem ersten Auslasskollektor (22) montiert ist und in einer Schnittebene parallel zur Einlassfläche oder zur Auslassfläche des Austauschkörpers (1) eine äußere Form aufweist, die im Wesentlichen komplementär zu der inneren Form ist, die der erste Auslasskollektor (22) in dieser Schnittebene aufweist.

10. Wärmetauscher nach einem der vorhergehenden Ansprüche, **dadurch gekennzeichnet, dass** er einen Einlassfilter (31) umfasst, der an dem Austauschkörper (1) an dessen Einlassfläche (11) über ein Zwischenstück (50) montiert ist.

11. Wärmetauscher nach Anspruch 10, **dadurch gekennzeichnet, dass** das Zwischenstück (50) ein Winkelprofil ist, dessen Seiten einen L-förmigen Querschnitt aufweisen, wobei jede Seite einen ersten Flügel (501) umfasst, der sich parallel zur Einlassfläche (11) oder zur Auslassfläche (12) erstreckt, und einen zweiten Flügel (502), der sich orthogonal zur Einlassfläche (11) oder zur Auslassfläche (12) erstreckt, wobei der Einlassfilter (31) und/oder der Auslassfilter (32) an dem ersten Flügel (501) montiert ist und der zweite Flügel (502) an dem Austauschkörper (1) montiert ist.

12. Wärmetauscher nach einem der vorhergehenden Ansprüche, **dadurch gekennzeichnet, dass** das Katalysatormaterial Partikel mit einem äquivalenten Durchmesser von einem minimalen Durchmesser bis zu einem maximalen Durchmesser umfasst, wobei das metallische Folienmaterial (30) ein Gewebe aus Metalldrähten (301, 302) mit einer Maschenöffnung von 10 bis 85 % des minimalen Durchmessers der Partikel ist.

13. Wärmetauscher nach einem der vorhergehenden Ansprüche, **dadurch gekennzeichnet, dass** er zur Verflüssigung von Wasserstoff als erstem Fluid (F1) konfiguriert ist, wobei das Katalysatormaterial zur Umwandlung von Ortho-Wasserstoff in Para-Wasserstoff konfiguriert ist, insbesondere das Katalysatormaterial Eisenoxid (Fe2O3) ist.

14. Verfahren zur Montage eines Wärmetauschers, wie in einem der Ansprüche 1 bis 13 definiert, wobei das Verfahren die folgenden Schritte umfasst :
a) Montage, insbesondere Schweißen, eines Auslassfilters (32) am ersten Auslasskollektor (22),
b) Positionierung des ersten Auslasskollektors (22) unterhalb des Austauschkörpers (1) entlang der Längsrichtung (z), wobei der Austauschkörper (1) so angeordnet ist, dass sich die ersten Durchgänge (10) parallel zur vertikalen Längsrichtung (z) erstrecken,
c) Montage, insbesondere Schweißen, des ersten Auslasskollektors (22), der mit dem Auslassfilter (32) versehen ist, am Austauschkörper (1), wobei der Auslassfilter (32) gegenüber der Auslassfläche (12) des Austauschkörpers (1) angeordnet ist,
d) Verteilung eines Katalysatormaterials in den ersten Durchgängen (10) des Austauschkörpers (1),
e) nach dem Füllen der ersten Durchgänge (10) mit Katalysatormaterial, Montage, insbesondere Schweißen, eines Einlassfilters (31) am Austauschkörper (1) gegenüber der Einlassfläche (11),
f) Montage, insbesondere Schweißen, des ersten Einlasskollektors (21) an den Austauschkörper (1) über dem Einlassfilter (31).

## Claims

1. Brazed plate-type exchanger-reactor configured for carrying out catalytic reactions between a first fluid (F1) and at least one catalyst material, said exchanger-reactor comprising :
- an exchange body (1) comprising several plates (2) arranged parallel to each other and to a longitudinal direction (z), said plates (2) being stacked with spacing so as to define between them a plurality of first passages (10) for the flow of the first fluid (F1) and a plurality of second passages (20) for the flow of a second fluid (F2) to be brought into heat exchange relation with the first fluid (F1), the first passages (10) of the exchange body (1) containing particles of said at least one catalyst material,
- a first inlet manifold (21) for introducing the first fluid (F1) into the first passages (10),
- a first outlet manifold (22) for discharging the first fluid (F1) from the first passages (10),
the exchange body (1) having an inlet surface (11) at which the first passages (10) are fluidically connected to the first inlet manifold (21) and an outlet surface (12) at which the first passages (10) are fluidically connected to the first outlet manifold (22),
the exchanger-reactor further comprising an inlet filter (31) arranged facing the inlet surface (11) of the exchange body (1) and an outlet filter (32) arranged facing the outlet surface (12) of the exchange body (1), the inlet filter (31) and the outlet filter (32) comprising a metallic sheet material (30) chosen from a metallic mesh, a non-woven metallic fiber, a sintered metallic powder or metallic fibers, a micro-perforated plate, **characterized in that** the inlet filter (31) is assembled to the exchange body (1) at its inlet surface (11).

2. Exchanger-reactor according to claim 1, **characterized in that** the metallic sheet material (30) has an open surface density ranging from 15 to 35 % or a volumetric pore density ranging from 75 to 98 %.

3. Exchanger-reactor according to one of claims 1 or 2, **characterized in that** the metallic sheet material (30) is formed in whole or in part of steel, in particular stainless steel, nickel or nickel alloy, in particular an alloy comprising 50% to 75% by weight of nickel.

4. Exchanger-reactor according to one of the preceding claims, **characterized in that** the metallic sheet material (30) has a thickness of 0.20 to 0.75 mm.

5. Exchanger-reactor according to one of the preceding claims, **characterized in that** the metallic sheet material is formed of one or more layers of said material.

6. Exchanger-reactor according to one of the preceding claims, **characterized in that** the metallic sheet material (30) is a woven fabric of metallic wires (301, 302), said wires (301, 302) having a diameter of 0.10 to 0.30 mm, preferably of 0.10 to 0.25 mm.

7. Exchanger-reactor according to claim 6, **characterized in that** the metallic sheet material (30) comprises at least one series of first metallic wires (301) intertwined with a series of second metallic wires (302) so as to form meshes (33), each mesh (33) being delimited between two consecutive first wires (301) and two consecutive second wires (302), the meshes (33) having an opening of 0.07 mm to 0.15 mm.

8. Exchanger-reactor according to one of the preceding claims, **characterized in that** the inlet filter (31) and/or the outlet filter (32) comprises a peripheral frame (40) which extends along at least a part of the contour of the metallic sheet material (30), in particular the inlet filter (31) and/or the outlet filter (32) is arranged between an upper part (401) and a lower part (402) of said peripheral frame (40).

9. Exchanger-reactor according to one of the preceding claims, **characterized in that** it comprises an outlet filter (32) assembled to the exchange body (1) at its outlet surface (12) or an outlet filter (32) assembled to the first outlet manifold (22), and having, in a sectional plane parallel to the inlet surface or to the outlet surface of the exchange body (1), an external shape substantially complementary to the internal shape presented by the first outlet manifold (22) in said sectional plane.

10. Exchanger-reactor according to one of the preceding claims, **characterized in that** it comprises an inlet filter (31) assembled to the exchange body (1) at its inlet surface (11) via an intermediate piece (50).

11. Exchanger-reactor according to claim 10, **characterized in that** the intermediate piece (50) is an angle iron whose sides have an L-shaped cross-section, each side comprising a first flange (501) extending parallel to the inlet surface (11) or to the outlet surface (12) and a second flange (502) extending orthogonally to the inlet surface (11) or to the outlet surface (12), the inlet filter (31) and/or the outlet filter (32) being assembled on the first flange (501) and the second flange (502) being assembled on the exchange body (1).

12. Exchanger-reactor according to one of the preceding claims, **characterized in that** the catalyst material comprises particles having an equivalent diameter ranging from a minimum diameter to a maximum diameter, the metallic sheet material (30) being a woven fabric of metallic wires (301, 302) having a mesh opening ranging from 10 to 85 % of said minimum particle diameter.

13. Exchanger-reactor according to one of the preceding claims, **characterized in that** it is configured for the liquefaction of hydrogen as a first fluid (F1), the catalyst material being configured for the conversion of ortho-hydrogen into para-hydrogen, in particular the catalyst material is iron oxide (Fe₂O₃).

14. Process for assembling an exchanger-reactor as defined by one of claims 1 to 13, said process comprising the following steps :
a) assembly, in particular welding, of an outlet filter (32) to the first outlet manifold (22),
b) positioning of the first outlet manifold (22) below the exchange body (1) following the longitudinal direction (z), the exchange body (1) being arranged such that the first passages (10) extend parallel to the longitudinal direction (z) which is vertical,
c) assembly, in particular welding, of the first outlet manifold (22) provided with the outlet filter (32) to the exchange body (1), said outlet filter (32) being arranged opposite the outlet surface (12) of the exchange body (1),
d) distribution of a catalyst material in the first passages (10) of the exchange body (1),
e) after filling the first passages (10) with catalyst material, assembly, in particular welding, of an inlet filter (31) to the exchange body (1) opposite the inlet surface (11),
f) assembly, in particular welding, of the first inlet manifold (21) to the exchange body (1) over the inlet filter (31).
